# EUROPÄISCHE PATENTSCHRIFT

(11) **EP 1 331 164 B1**
(45) Veröffentlichungstag und Bekanntmachung des Hinweises auf die Patenterteilung: **18.04.2007**
(21) Anmeldenummer: 03000425.3
(22) Anmeldetag: 10.01.2003
(51) Int. Cl.: B62D 29/04

(54) **Verbundbauteil für eine Fahrzeugkarosserie, insbesondere für ein Fahrzeugdach**
Composite element for a vehicle body, particularly for a vehicle roof
Elément composite pour carrosserie de véhicule, en particulier pour toit de véhicule

(30) Priorität: 25.01.2002 DE 10202911
(43) Veröffentlichungstag der Anmeldung: 30.07.2003
(73) Patentinhaber: Webasto AG, 82131 Stockdorf (DE)
(72) Erfinder: Elbs, Norbert, 80797 München (DE)
(74) Vertreter: Schwan - Schwan - Schorer

(56) Entgegenhaltungen:
- EP-A- 0 133 119
- EP-A- 1 106 485
- DE-A- 4 303 054
- DE-A- 10 017 206
- GB-A- 2 144 683

## Beschreibung

Die vorliegende Erfindung betrifft ein Verbundbauteil für eine Fahrzeugkarosserie, insbesondere für ein Fahrzeugdach, gemäß dem Oberbegriff von Anspruch 1.

Es ist bekannt, Verbundbauteile für Fahrzeugkarosserien, insbesondere für Dachmodule, dadurch herzustellen, daß eine die Außenhaut bildende Coextrusionsfolie aus faserfreiem Material mit einer faserverstärkten Trägerstruktur hinterspritzt oder hinterpresst wird, um die Folie zu verstärken. Ferner kann zu diesem Zweck auch ein sogenanntes Paintless-Film-Molding-System aufgebaut werden. Die Fasern in der Trägerstruktur sind in allen Fällen gleichmäßig über die Trägerstruktur verteilt. Ein gattungsgemäßes Verbundbauteil für eine Fahrzeugkarosserie ist aus der EP 1 106 485 A bekannt.

Da es sich bei der Folie und der Trägerstruktur allein schon aufgrund der Tatsache, daß die Folie faserfrei ist, während die Trägerstruktur faserverstärkt ist, um unterschiedliche Materialien handelt, ergibt sich im allgemeinen ein deutlich unterschiedlicher Wärmeausdehnungskoeffizient. Dies führt zu einem Wölbungseffekt des Verbundbauteils in Abhängigkeit von der Umgebungstemperatur. Falls die Eigensteifigkeit des Verbundbauteils nicht ausreicht, um einer solchen Wölbungsänderung entgegenzuwirken, kann das Bauteil mit Rippen versehen werden. Eine solche Verstärkung verbietet sich jedoch für den Fall, daß eine hochwertige Oberfläche erzielt werden soll, da sich die Rippen an der Oberfläche abzeichnen könnten.

Es ist Aufgabe der vorliegenden Erfindung, ein Verbundbauteil mit einer faserfreien Außenhaut und einer faserverstärkten Trägerstruktur zu schaffen, welches die Ausbildung einer hochwertigen Oberfläche erlaubt und dennoch gegenüber Wölbungsänderungen aufgrund von Temperaturänderungen hinreichend stabilisiert ist.

Diese Aufgabe wird erfindungsgemäß gelöst durch ein Verbundbauteil mit den in Anspruch 1 definierten Merkmalen. Bei dieser erfindungsgemäßen Lösung ist vorteilhaft, daß dadurch, daß eine Grenzschicht mit einem höheren Faseranteil vorgesehen ist, ein im Inneren des Verbundbauteils liegender Bereich mit aufgrund des höheren Faseranteils geringerer Wärmeausdehnung geschaffen wird, der als "neutrale Faser" innerhalb des Verbundbauteils zwischen der Außenhaut, welche die größte Wärmeausdehnung aufweist, und dem Teil der Trägerstruktur mit niedrigerem Faseranteil, der eine geringere Wärmeausdehnung als die Außenhaut, jedoch eine größere Wärmeausdehnung als die Grenzschicht aufweist, wirkt. Auf diese Weise heben sich die unterschiedlichen Wärmeausdehnungskräfte, die in der Außenhaut bzw. der Trägerstruktur wirken, innerhalb des Bauteils, nämlich in der Grenzschicht, auf Dadurch können Verbundbauteile mit hoher Temperaturstabilität hergestellt werden, was insbesondere für Dachmodule interessant ist, wenn es sich bei dem Verbundbauteil um den Randbereich einer von einem verstellbaren Deckel verschlossenen Dachöffnung handelt, welcher über den gesamten Temperatureinsatzbereich geometrisch stabil bleiben soll.

Bevorzugte Ausgestaltungen der Erfindung ergeben sich aus den Unteransprüchen.

Im folgenden wird die Erfindung anhand der einzigen beigefügten Zeichnung beispielhaft näher erläutert, welche in schematischer Darstellung einen Schnitt durch ein erfindungsgemäßes Verbundbauteil zeigt, wobei zusätzlich in schematischer Weise die bei einer Temperaturerhöhung auftretenden Wärmeausdehnungskräfte mittels Pfeilen dargestellt sind.

Bei dem gezeigten Beispiel umfasst ein Verbundbauteil 10 eine als faserfreie Folie ausgebildete Außenhaut 12 sowie eine mit Fasern 14 verstärkte Trägerstruktur 16, welche auf die Innenseite der Folie 12 aufgebracht ist. Bei der Folie 12 handelt es sich vorzugsweise um eine Coextrusionsfolie, welche mit der Trägerstruktur 16 hinterspritzt oder hinterpresst ist. Das Verbundbauteil 10 kann alternativ auch als Paintless-Film-Molding-System aufgebaut sein.

Vorzugsweise handelt es sich bei dem Verbundbauteil 10 um einen Teil eines Fahrzeugdaches, insbesondere eines sogenannten Dachmoduls. Dabei bildet die Folie 12 dann die Außenseite einer festen Dachfläche.

An der Grenzfläche zu der Folie 12 weist die Trägerstruktur 16 eine Grenzschicht 18 auf, welche bezüglich der den Rest der Trägerstruktur 16 bildenden Basisschicht 20 mit einem erhöhten Faseranteil versehen ist. Der Glasfaseranteil der Grenzschicht 18 richtet sich dabei nach den in dem für den Einsatz des Verbundbauteils 10 zu erwartenden Temperaturen bzw. Temperaturänderungen bzw. den dadurch verursachten Wärmeausdehnungskräften. Dabei spielen die Materialien der Folie 12 und der Trägerstruktur 14 sowie der Faseranteil der Basisschicht 20 und die entsprechenden Schichtdicken eine Rolle.

Die Erhöhung des Glasfaseranteils an der Grenzschicht 18 kann beispielsweise durch das Einlegen einer zusätzlichen Glasfasermatte erfolgen.

Bei dem Grundmaterial der Trägerstruktur 16 handelt es sich vorzugsweise um Polyurethan. Falls die Trägerstruktur 16 mittels des sogenannten Langfaserinjektionsverfahrens (LFI-Verfahren) hergestellt wird, kann der gewünschte Aufbau der Trägerstruktur 16 dadurch erzielt werden, daß der Extrusionskopf eine erste Spur mit einem PU/Glasfasergemisch mit erhöhtem Glasfaseranteil ablegt und anschließend eine zweite Spur mit einem niedrigeren, bauteilspezifischen Glasfaseranteil darüber gelegt wird.

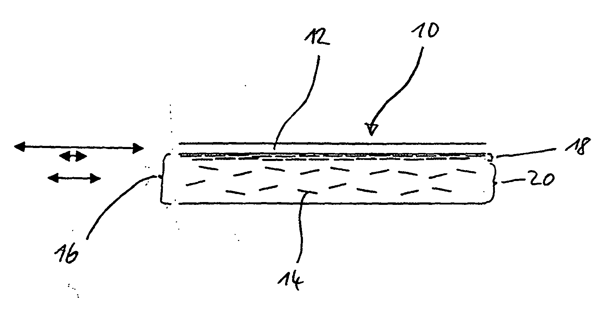

Ferner sind in der einzigen Figur schematisch die bei einer Temperaturerhöhung auftretenden Kräfte mittels Pfeilen dargestellt, wobei die Länge der Pfeile für die Größe der Kraft steht.

Dabei ist ersichtlich, daß sich die Folie 12 den größten Wärmeausdehnungskoeffizient hat und folglich eine große Wärmeausdehnungskraft erzeugt, während die Basisschicht 20 mit niedrigeren Faseranteil einen niedrigeren Wärmeausdehnungskoeffizienten hat und insofern eine geringere Wärmeausdehnungskraft erzeugt. Die Grenzschicht 18 weist dabei aufgrund des erhöhten Faseranteils einen niedrigeren Wärmeausdehnungskoeffizienten als die Basisschicht 20 auf, wodurch sich nur eine sehr geringe Wärmeausdehnungskraft in der Grenzschicht 18 ergibt. Auf diese Weise wirkt die Grenzschicht 18 als "neutrale Faser", innerhalb welches sich die Kräfte der Folienschicht 12 und der Basisschicht 20 aufheben. Zusätzlich können die Unterschiede der Wärmeausdehnungskoeffizienten zwischen der Folienschicht 12 und der Basisschicht 20 durch eine entsprechend dickere Auslegung der Basisschicht 20 ausgeglichen werden.

### Bezugszeichenliste

- 10: Verbundbauteil
- 12: Folie
- 14: Fasern
- 16: Trägerstruktur
- 18: Grenzschicht
- 20: Basisschicht

## Patentansprüche

1. Verbundbauteil für eine Fahrzeugkarosserie, insbesondere für ein Fahrzeugdach, mit einer faserfreien Außenhaut (12) und einer faserverstärkten Trägerstruktur (16), welche an der Innenseite der Außenhaut aufgebracht ist, um die Außenhaut zu verstärken, **dadurch gekennzeichnet, dass** in dem Bereich an der Grenzfläche zwischen der Außenhaut (12) und der Trägerstruktur (16) in der Trägerstruktur eine Grenzschicht (18) ausgebildet ist, innerhalb welcher der Faseranteil bezüglich des außerhalb der Grenzschicht liegenden Bereichs (20) der Trägerstruktur erhöht ist.

2. Verbundbauteil nach Anspruch 1, **dadurch gekennzeichnet, dass** es sich bei der Außenhaut (12) um eine Coextrusionsfolie handelt.

3. Verbundbauteil nach Anspruch 1 oder 2, **dadurch gekennzeichnet, dass** es sich bei dem Verbundbauteil (10) um einen Bestandteil eines Dachmoduls handelt.

4. Verbundbauteil nach einem der vorgehenden Ansprüche, **dadurch gekennzeichnet, dass** das Basismaterial der Trägerstruktur (16) Polyurethan ist.

5. Verbundbauteil nach einem der vorgehenden Ansprüche, **dadurch gekennzeichnet, dass** die Außenhaut (12) mit der Trägerstruktur (16) hinterspritzt oder hinterpresst ist.

6. Verbundbauteil nach einem der Ansprüche 1 bis 4, **dadurch gekennzeichnet, dass** es sich bei dem Verbundbauteil um ein Paintless-Film-Moulding-System handelt.

7. Verbundbauteil nach einem der vorgehenden Ansprüche, **dadurch gekennzeichnet, dass** in der Grenzschicht (18) eine zusätzliche Glasfasermatte eingelegt ist.

8. Verbundbauteil nach einem der Ansprüche 1 bis 6, **dadurch gekennzeichnet, dass** die Trägerstruktur (16) mittels Langfaserinjektion hergestellt ist, wobei in der Grenzschicht (18) ein Gemisch mit einem höheren Faseranteil abgelegt ist.

## Claims

1. Composite part for a vehicle body, in particular for a vehicle roof, comprising a fiber-free outer skin (12) and a fiber-reinforced support structure (16) which is applied onto the inner side of the outer skin so as to reinforce the outer skin, **characterized in that**, in the region of the interface between the outer skin (12) and the support structure (16) there is formed an interface region (18) within the support structure, within which the fiber content is increased with respect to the region (20) of the support structure outside the interface region.

2. Composite part as defined in claim 1, **characterized in that** the outer skin (12) is a coextrusion foil.

3. Composite part as defined in claims 1 or 2, **characterized in that** the composite part (10) is part of a roof module.

4. Composite part as defined in any one of the preceding claims, **characterized in that** the base material for the support structure (16) is polyurethane.

5. Composite part as defined in any one of the preceding claims, **characterized in that** the support structure (16) is formed by back injection molding or back compression molding of the outer skin (12).

6. Composite part as defined in any one of claims 1 to 4, **characterized in that** the composite part is a paintless film moulding system.

7. Composite part as defined in any one of the preceding claims, **characterized in that** an additional glass fiber mat is placed within the interface region (18)

8. Composite part as defined in any one of claims 1 to 6, **characterized in that** the support structure (16) is formed by long fiber injection, wherein a mixture with a higher fiber content is deposited within the interface region (18).

## Revendications

1. Elément composite pour carrosserie de véhicule, en particulier pour toit de véhicule, avec une peau extérieure sans fibres (12) et une structure de support renforcée en fibres (16) qui est appliquée sur la face intérieure de la peau extérieure afin de renforcer la peau extérieure, **caractérisé en ce qu'**une couche limite (18) à l'intérieur de laquelle la part de fibres est supérieure à celle de la zone (20) située à l'extérieur de la couche limite de la structure de support est réalisée dans la zone située sur la surface limite entre la peau extérieure (12) et la structure de support (16) dans la structure de support.

2. Elément composite selon la revendication 1, **caractérisé en ce que** la peau extérieure (12) est un film de coextrusion.

3. Elément composite selon la revendication 1 ou 2, **caractérisé en ce que** l'élément composite (10) est une composante d'un module de toit.

4. Elément composite selon l'une quelconque des revendications précédentes, **caractérisé en ce que** le matériau de base de la structure de support (16) est du polyuréthanne.

5. Elément composite selon l'une quelconque des revendications précédentes, **caractérisé en ce que** la peau extérieure (12) est injectée ou comprimée dans le moule avec la structure de support.

6. Elément composite selon l'une quelconque des revendications 1 à 4, **caractérisé en ce que** l'élément composite est un système résultant du procédé « Paintless Film Moulding ».

7. Elément composite selon l'une quelconque des revendications précédentes, **caractérisé en ce qu'**un tapis en fibre de verre supplémentaire est inséré dans la couche limite (18).

8. Elément composite selon l'une quelconque des revendications 1 à 6, **caractérisé en ce que** la structure de support (16) est fabriquée par injection de fibres longues, un mélange avec une plus grande part de fibres étant déposé dans la couche limite (18).
